Europäisches Patentamt

European Patent Office

Office européen des brevets

(11) Veröffentlichungsnummer: **0 415 160 A1**

# (12) EUROPÄISCHE PATENTANMELDUNG

(21) Anmeldenummer: **90115474.0**

(22) Anmeldetag: **11.08.90**

(51) Int. Cl.⁵: **C02F 3/08, C02F 3/12**

(30) Priorität: **01.09.89 DE 3929049**

(43) Veröffentlichungstag der Anmeldung:
**06.03.91 Patentblatt 91/10**

(84) Benannte Vertragsstaaten:
**AT CH DE DK FR GB IT LI NL SE**

(71) Anmelder: **Schwarting, Norbert**
**Anemoneweg 5**
**W-7994 Langenargen(DE)**

Anmelder: **Schwarting, Bernhard**
**Eckenerstrasse 54**
**W-7990 Friedrichshafen(DE)**

Anmelder: **Schmeisser, Annette**
**Eckenerstrasse 54**
**W-7990 Friedrichshafen(DE)**

(72) Erfinder: **Schwarting, Norbert**
**Anemonenweg 5**
**W-7994 Langenargen(DE)**

(74) Vertreter: **Engelhardt, Guido, Dipl.-Ing.**
**Patentanwalt Montafonstrasse 35 Postfach**
**1350**
**W-7990 Friedrichshafen 1(DE)**

(54) **Reaktor zum mikrobiellen Abbau organisch belasteter Substrate.**

(57) Bei einem Reaktor (1) zum mikrobiellen Abbau organisch belasteter Substrate (5), der aus mindestens einem von dem Substrat (5) durchströmten Aufnahmetank (2) und einem in diesem vorgesehenen Trägermedium (12) zum Ansiedeln der Bakterien besteht, ist das Trägermedium (12) in einem durchströmbaren, den inneren Querschnitt des Aufnahmetanks (2) angepaßten Behälter (11) eingesetzt und zum Aufwirbeln des Trägermediums (12) ist der Behälter (11) in dem Aufnahmetank (2) höhenverstellbar und/oder rotierend antreibbar angeordnet.

Durch diese Ausgestaltung ist eine umweltfreundliche und zufriedenstellende Reinigung von Abwässern durch aeroben oder anaeroben Abbau zu erzielen, auch ist ein hoher Wirkungsgrad gegeben, so daß für den Betrieb des Reaktors nur ein geringer Energieaufwand erforderlich ist.

FIG. 1

# REAKTOR ZUM MIKROBIELLEN ABBAU ORGANISCH BELASTETER SUBSTRATE

Die Erfindung bezieht sich auf einen Reaktor zum mikrobiellen Abbau organisch belasteter Substrate, der aus mindestens einem von dem Substrat durchströmten Aufnahmetank und einem in diesem vorgesehenen Trägermedium zum Ansiedeln der Bakterien besteht.

Die bekannten Reaktoren dieser Art sind entweder mit einem Festbett, in dem in den das Substrat aufnehmenden Tank Rohre eingebaut oder ein Schüttgut als Trägermedium eingelagert sind, oder mit lose eingelegten Feststoffen, die durch die Strömung des Substrates in einem Schwebezustand gehalten werden, versehen. Eine zufriedenstellende Betriebsweise ist bei diesen Festbett- bzw. Wirbelschichtreaktoren jedoch nicht gegeben.

Durch die im Abwasser enthaltenen Feststoffe werden nämlich mitunter bereits nach kurzer Zeit die Freiräume zwischen dem ortsfesten Trägermedium verstopft, ein Abbau des Substrates kann dann nicht mehr stattfinden, der Reaktor muß entleert und gereinigt werden. Mit einem Wirbelschichtreaktor sind zwar hohe Raumbelastungen zu erzielen, der Energieaufwand, der erforderlich ist, um mit Hilfe der Strömung des Substrates das Trägermedium in einem Schwebezustand zu halten, ist jedoch außerordentlich hoch, so daß ein wirtschaftlicher Betrieb nicht mehr gegeben ist. Außerdem wird durch die hohe Strömungsgeschwindigkeit der Reaktor vollständig durchmischt, oftmals werden daher frisch in den Aufnahmetank eingebrachte und noch nicht abgebaute Substratteile, insbesondere dessen Feststoffpartikel, ausgetragen.

Aufgabe der Erfindung ist es daher, einen Reaktor der eingangs genannten Gattung zu schaffen, mittels dem nicht nur eine umweltfreundliche und zufriedenstellende Reinigung von Abwässern durch aeroben oder anaeroben Abbau zu erzielen ist und der einen hohen Wirkungsgrad aufweist, sondern daß für dessen Betrieb nur ein außerordentlich geringer Energieaufwand erforderlich ist. Der dazu notwendige konstruktive Aufwand soll gering gehalten werden, dennoch soll über einen längeren Zeitraum eine störungsfreie Betriebsweise gegeben sein.

Gemäß der Erfindung wird dies dadurch erreicht, daß das Trägermedium in einem von dem Substrat durchströmbaren, dem inneren Querschnitt des Aufnahmetanks angepaßten Behälter eingesetzt, an einem Halter angebracht oder auf einem Zwischenboden gelagert ist und daß zum Aufwirbeln des Trägermediums der Behälter bzw. der Halter in dem Aufnahmetank höhenverstellbar und/oder rotierend antreibbar angeordnet und/oder das Substrat impulsweise von unten von dem Trägermedium anströmbar ist.

Zweckmäßig ist es hierbei, den Behälter aus einem Drahtgeflecht oder aus zwei mit Abstand zueinander gehaltenen Lochscheiben zu bilden, dessen Maschenweite bzw. deren Durchtrittsöffnungen für das Substrat geringfügig kleiner bemessen sind als die Korngröße des Trägermediums.

Angebracht ist es des weiteren, den Behälter bzw. den Halter auf der oberen Seite mit abstehenden Nocken oder dgl. z. B. in Form eines Rechens zur Auflösung einer Schwimmschicht zu versehen.

Der Halter bzw. der Zwischenboden kann in einfacher Ausgestaltung als Lochscheibe oder als von dem Substrat durchströmbarer ein- oder zweiteiliger Rahmen beispielsweise in Form eines Rechens ausgebildet werden.

Vorteilhaft ist es ferner, den Behälter mit Einbauten z. B. in Form von Wirbelblechen zur Durchwirbelung des Substrates und/oder des Trägermediums bzw. den Halter mit Auftriebsmitteln. z. B. in Form von in dessen äußeren Bereich angeordneten Luftkammern zu versehen.

Zur Aufnahme des Trägermediums in einem Aufnahmetank können auch mehrere mit Abstand zueinander angeordnete Behälter bzw. Halter bzw. Zwischenböden vorgesehen werden, wobei es angezeigt ist, bei einem aus zwei vorzugsweise zu einer Baueinheit zusammengefaßten Aufnahmetanks gebildeten Reaktors die Behälter bzw. Halter der Aufnahmetanks gegensinnig zueinander höhenverstellbar anzutreiben und deren Antriebsmittel über eine drehbar gelagerte vorzugsweise angetriebene Wippe oder auf ähnliche Weise zwangläufig miteinander zu verbinden.

Bei einem aus zwei Aufnahmetanks gebildeten Reaktor ist es ferner angebracht, die Gewichtskräfte der in den einzelnen Aufnahmetanks eingesetzten höhenverstellbaren Behälter oder Halter und der in diesen enthaltenen Trägermedien jeweils etwa gleich groß zu bemessen.

Zur schubweisen Durchführung des Substrates durch das vorzugsweise auf ortsfesten Zwischenböden gelagerten Trägermediums ist es angebracht, zwei Aufnahmetanks des Reaktors hydraulisch miteinander zu verbinden und in der Verbindungsleitung eine Förderpumpe einzusetzen, wobei zur Reduzierung des erforderlichen Pumpvolumens einer der Aufnahmetanks mit einem oder mehreren Zwischenböden zur Lagerung des Trägermediums versehen und der andere Aufnahmetank als auf gleicher Höhe angeordneter Vorratstank ausgebildet sein kann, der in seinem Volumen geringer bemessen ist als der mit diesem hydraulisch verbundene Aufnahmetank.

Nach einer Weiterbildung kann zu dem gleichen Zweck der das Trägermedium aufnehmende Aufnahmetank ganz oder teilweise in vertikal verlaufende voneinander getrennte Kammern unterteilt und das Substrat zum Aufwirbeln des Trägermediums gesteuert den einzelnen Kammern zugeführt werden. Dazu kann eine unterhalb eines Zwischenbodens angeordnete aus einzelnen verdrehbaren Segmenten gebildete flächerartige Blende, ein Drehverteiler, einzelne in die Kammer mündende Zuführungsleitungen oder dgl. führen.

Als Trägermedium sollte ein Stoff vorgesehen werden, dessen Dichte etwa 1 g/cm³, vorzugsweise geringfügig über oder unter 1 g/cm³, beträgt und das als Granulat eine große Oberfläche, wie beispielsweise Blähton, Aktivkohle, Kunststoffteile oder ein ähnliches schüttfähiges Gut aufweist. Es können aber auch Glaskugeln mit einem Durchmesser von etwa 3 - 5 mm oder Glasschwämme als Trägermedium verwendet werden.

Bei einem Trägermedium, dessen Dichte über 1 g/cm³ oder unter 1 g/cm³ beträgt, sollte die Absenkgeschwindigkeit des Behälters größer bzw. kleiner bemessen sein als die Geschwindigkeit bei dessen Fückführung und bei einem Träger medium, dessen Dichte unter 1 g/cm³ liegt, sollte der Behälter als U-förmiger nach unten offener Käfig ausgebildet sein, so daß das Ein- und/oder Ausbringen des Trägermediums auf einfache Weise vorzunehmen ist.

Nach einer andersartigen Ausgestaltung können als Trägermedium aber auch mit seitlichem Abstand zueinander angeordnete Gewebebahnen und/oder Streifen aus Kunststoff oder einem ähnlichen Material vorgesehen werden, die ein-oder beidseitig, vorzugsweise mit ihrem oberen Ende an dem Halter befestigt sind.

Zweckmäßig ist es hierbei, den Aufnahmetank mit einem oder mehreren im Verstellbereich des Halters angeordneten Abstreifern z. B. in Form eines zwischen die Gewebebahnen eingreifenden Rechens auszustatten, so daß an dem Trägermedium ablagernde Biomasse unschwer abgestreift werden kann.

Der gemäß der Erfindung ausgebildete Reaktor zum mikrobiellen Abbau organisch belasteter Substrate ist nicht nur sehr einfach in der konstruktiven Ausgestaltung und somit ohne großen Bauaufwand herzustellen, sondern dieser ermöglicht vor allem einen gleichmäßigen störungsfreien mikrobiellen Abbau, und zwar einen aeroben und auch einen anaeroben Abbau bei äußerst geringem Energieaufwand. Wird nämlich das unterschiedlich zu wählende Trägermedium in einem Behälter eingesetzt oder an einem Halter angebracht, der in dem Aufnahmetank höhenverstellbar und/oder rotierend antreibbar angeordnet ist, oder wird das Trägermedium impulsweise von dem Substrat von unten angeströmt und dadurch aufgewirbelt, so ist es leicht möglich, stets eine zufriedenstellende Durchströmung des Trägermediums und damit einen guten Übergang der an diesem angesiedelten Bakterien in das Substrat sicherzustellen.

Der das Trägermedium aufnehmende Behälter bzw. der dieses tragende Halter kann nämlich bei geringem Energieaufwand in der Höhe verstellt und/oder verdreht werden, auch das Anströmen des Trägermediums ist mit geringem Energieaufwand zu bewerkstelligen. Das Trägermedium wird dadurch in einen Schwebezustand versetzt und aufgelockert, so daß dessen gesamte Oberfläche wirksam ist und abgelagerte Feststoffe des Substrates ausgespült werden. Dadurch ist über einen nahezu unbegrenzten Zeitraum eine hohe Raumzeitausbeute zu erzielen und damit ein hoher Wirkungsgrad des Reaktors gegeben. Bei hoher Konzentration der aktiven Biomasse und ohne daß Verluste in Kauf zu nehmen sind, kann demnach unter wirtschaftlichen Bedingungen ein gleichbleibender und auch den jeweiligen Erfordernissen anpaßbarer mikrobieller Abbau und damit eine zufriedenstellende Reinigung von Abwässern vorgenommen werden.

In der Zeichnung sind einige Ausführungsbeispiele des gemäß der Erfindung ausgebildeten Reaktors zum mikrobiellen Abbau organisch belasteter Substrate in schematischer Darstellung dargestellt, die nachfolgend im einzelnen erläutert sind. Hierbei zeigen:

Figur 1 eine aus einem Aufnahmetank und einen in diesen eingesetzten höhenverstellbaren Behälter für das Trägermedium mit einer Dichte kleiner als 1 g/cm³ bestehenden Reaktor während einer Abwärtsbewegung des Behälters,

Figur 2 den Reaktor nach Figur 1 bei einer Aufwärtsbewegung des Behälters,

Figur 3 eine Draufsicht auf den Behälter nach den Figuren 1 und 2,

Figur 4 den Reaktor nach Figur 1 mit einem in dem Behälter eingesetzten Trägermedium mit einer Dichte größer als 1 g/cm³ bei einer Aufwärtsbewegung des Behälters,

Figur 5 den Reaktor nach Figur 4 während einer Abwärtsbewegung des Behälters,

Figur 6 eine Draufsicht auf den bei dem Reaktor nach den Figuren 4 und 5 vorgesehenen Behälter,

Figur 7 den Reaktor nach Figur 1 mit an einem Halter befestigten Gewebebahnen als Trägermedium bei dessen Aufwärtsbewegung,

Figur 8 den Reaktor nach Figur 7 bei einer Abwärtsbewegung des Halters,

Figur 9 den Reaktor nach Figur 1 mit in einem Rahmen als Halter eingespannten Gewebebahnen als Trägermedium,

Figur 10 einen aus zwei zu einer Baueinheit zusammengesetzten Aufnahmetanks mit jeweils zwei in diesen angeordneten Behälter gebildeten Reaktor,

Figur 11 einen andersartigen ebenfalls aus zwei Aufnahmetanks gebildeten Reaktor,

Figur 12 einen aus zwei hydraulisch miteinander verbundenen Aufnahmetanks bestehenden Reaktor,

Figur 13 einen aus einem Aufnahmetank und einem Vorratstank gebildeten Reaktor und

Figur 14 den Aufnahmetank des Reaktors nach Figur 13 in Draufsicht.

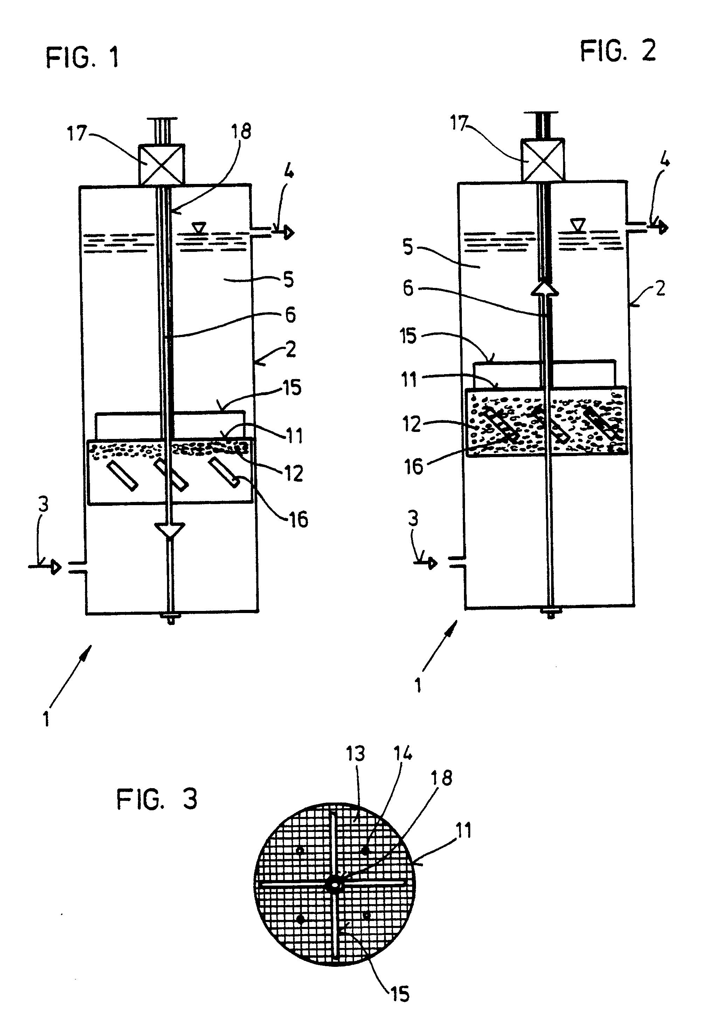

Der in den Figuren 1 bis 9 dargestellte und jeweils mit 1 bezeichnete einstufige Reaktor dient zum mikrobiellen aeroben oder anaeroben Abbau eines in diesen eingebrachten organisch belasteten Substrats 5 und besteht aus einem Aufnahmetank 2, der mit einer Einlaßöffnung 3 für das zu reinigende Abwasser sowie einer Auslaßöffnung 4 für das gereinigte Abwasser versehen ist, sowie einem Behälter 11 bzw. 21 zur Aufnahme eines Trägermediums 12 bzw. 22 bzw. einem Halter 19, 19′ zur Halterung eines Trägermediums 20, 20′, an dem sich die zum Abbau erforderlichen Bakterien ansiedeln.

Bei der Ausgestaltung nach den Figuren 1 bis 3 ist der Behälter 11, wie dies insbesondere der Figur 3 entnommen werden kann, aus einem Drahtgeflecht 13, das durch vertikal verlaufende Stangen 14 gehalten ist, gebildet und auf einer in dem Aufnahmetank 2 zentrisch angeordneten Stange 6 höhenverstellbar geführt. Zur Höhenverstellung des Behälters 11 dient ein Hydraulik-Aggregat 17, das über ein Zugrohr 18 mit diesem trieblich verbunden ist. Außerdem sind in dem Behälter 11 Leitbleche 16 eingebaut und auf dessen Oberseite ist ein Rechen 15 zur Auflösung einer Schwimmschicht auf dem Substrat 5 vorgesehen.

Das in dem Behälter 11 eingefüllte granulatartige Trägermedium 12 weist eine Dichte auf, die kleiner als 1 g/cm³ ist. Dadurch schwimmt dieses, so lange der Behälter nicht, wie dies in Figur 2 gezeigt ist, nach oben bewegt wird, an der oberen Wand des Behälters 11. Wird jedoch der Behälter 11 mittels des Hydraulik-Aggregates 17 angehoben, schwimmt bzw. schwebt das Trägermedium 12 in dem durch den Behälter 11 begrenzten Raum, so daß abgelagerte Feststoffe des Substrates 5 leicht ausgespült werden und Verstopfungen nicht eintreten. Vor allem aber können die auf dem Trägermedium 12 angesiedelten Bakterien während der gesamten Verstellbewegung des Behälters 11 in das Substrat 5 eingebracht werden. Somit ist ein stets zufriedenstellender Abbau mit geringem Energieaufwand zu erzielen. Selbstverständlich ist die Verstellgeschwindigkeit des Behälters 11 und damit des Trägermediums 12 den jeweiligen Gegebenheiten leicht anpaßbar. Und wird der Behälter 11 als unten offener Käfig ausgebildet, kann das Trägermedium 12 durch die Einlaßöffnung 3 eingebracht und durch Anheben des Behälters 11 über das Flüssigkeitsniveau hinaus auch durch die Auslaßöffnung 4 ausgetragen werden. Eine Bestückung des Behälters 11 mit einem frischen Trägermedium ist demnach auf äußerst einfache Weise in kurzer Zeit vorzunehmen.

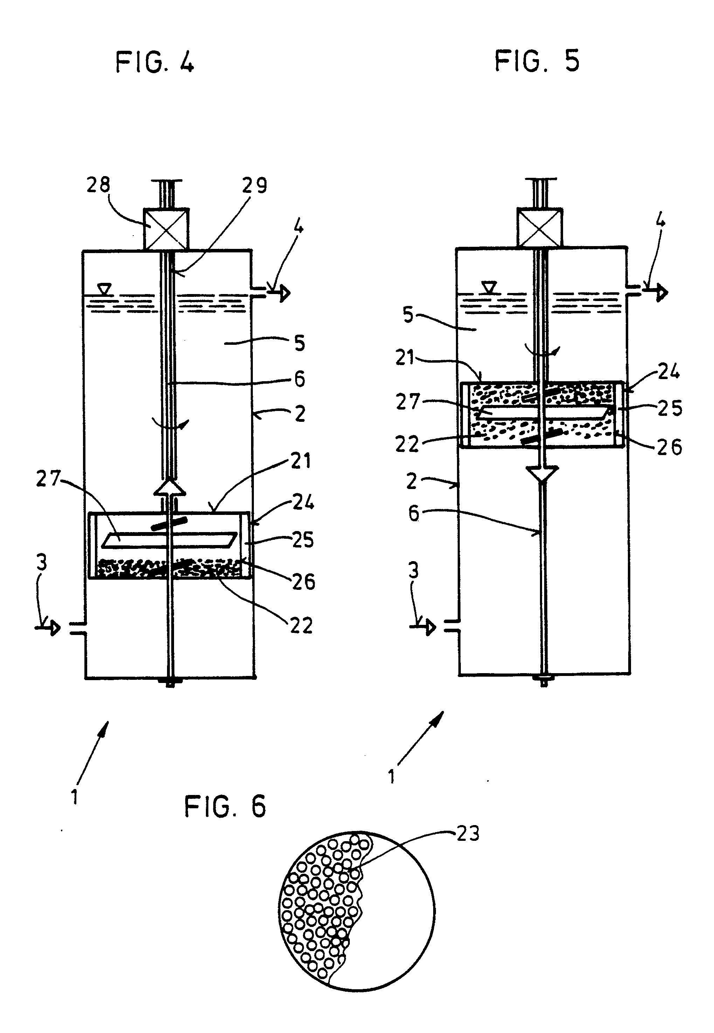

Der Behälter 21 nach den Figuren 4 bis 6 für ein granulatartiges Trägermedium 22, dessen Dichte größer als 1 g/cm³ beträgt, besteht aus zwei Lochflächen 23, deren Durchtrittsöffnungen geringfügig kleiner bemessen sind als die Korngröße des Trägermediums 22. Mittels zweier Wände 24 und 26 ist hierbei im äußeren Bereich des Behälters 21 eine Luftkammer 25 gebildet, die Gewichtskraft des Trägermediums 22 kann somit ausgeglichen werden. Außerdem ist der mittels eines Hydraulik-Aggregates 28 über eine Zugstange 29 höhenverstellbar und/oder auch rotierend antreibbare Behälter 22 mit Wirbelblechen 27 zur gesteigerten Durchmischung des Substrates 5 und/oder des Trägermediums 22 ausgestattet.

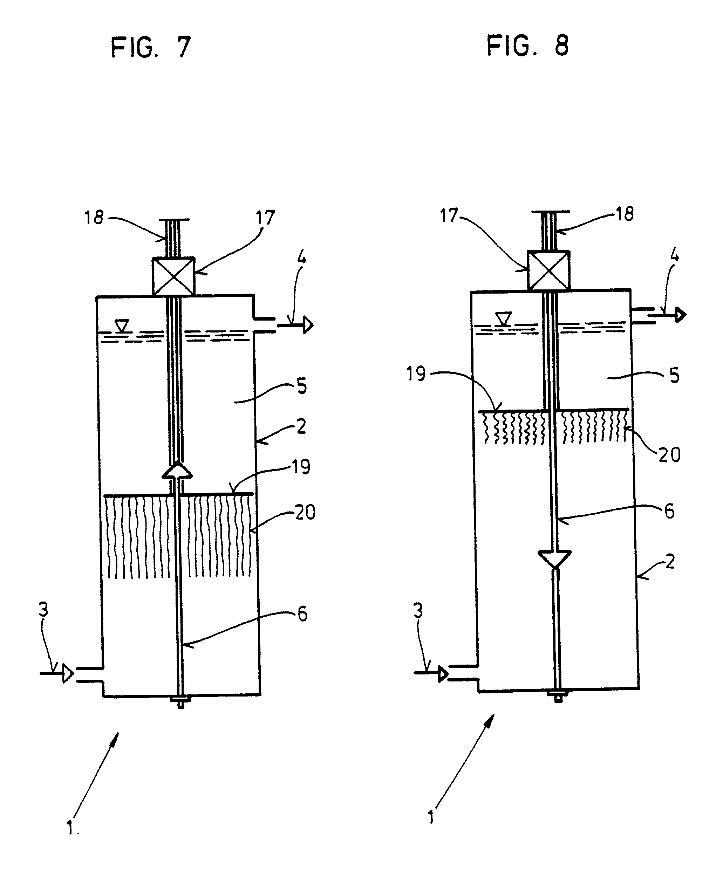

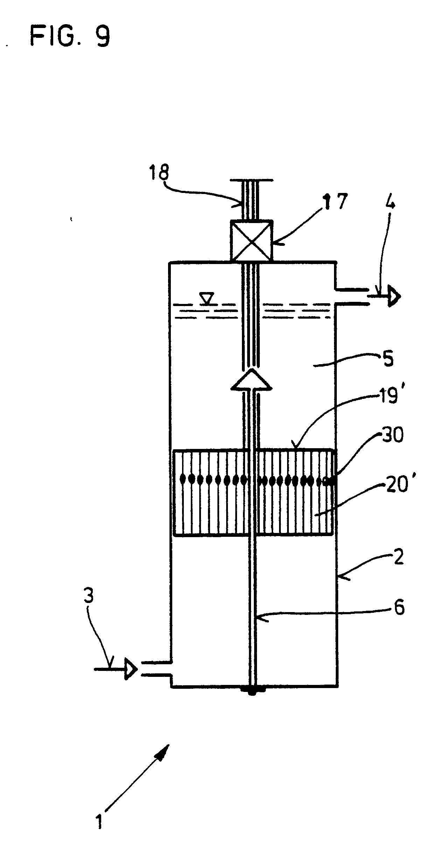

Bei dem Reaktor 1 nach den Figuren 7 bis 9 sind als Trägermedium 20 bzw. 20′ Gewebebahnen vorgesehen, die mit einem Ende (Figuren 7 und 8) oder beidseitig (Figur 9) an dem Halter 19 bzw. 19′ befestigt sind. Bei einer Aufwärtsbewegung des Halters 19 werden die einseitig befestigten Gewebebahnen auseinandergezogen und durch das Substrat 5 hindurchgeführt, bei einer Abwärtsbewegung werden dagegen die Gewebebahnen zusammengedrückt, so daß die Bakterien gut an das Substrat 5 abgegeben werden. Zum Abstreifen von an dem Trägermedium 20, 20′ evtl. anhängender Biomasse kann, wie dies in Figur 9 gezeigt ist, in dem Aufnahmetank 2 ein Rechen 30 angeordnet werden, zwischen dem die Gewebebahnen 20′ hindurchgeführt werden.

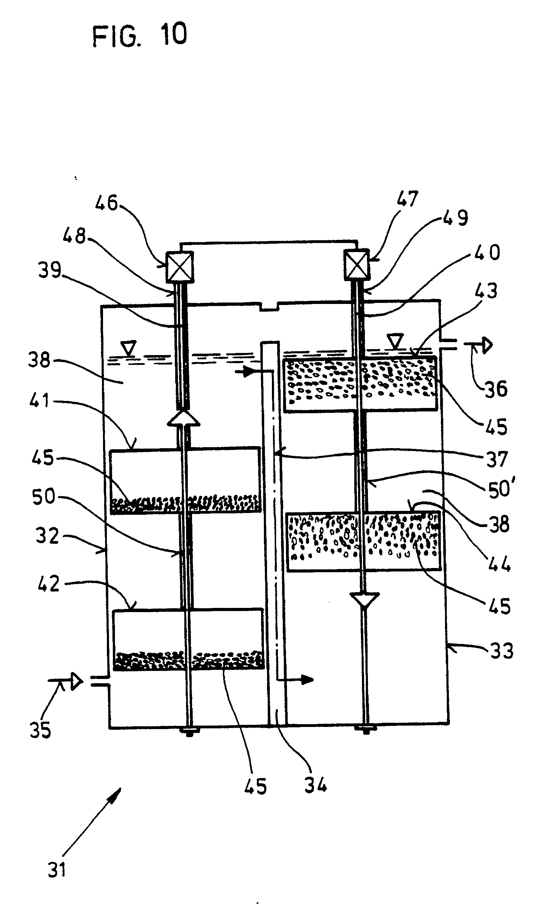

Bei dem zweistufigen Reaktor 31 nach Figur 10 sind zwei Aufnahmetanks 32 und 33 zu einer Baueinheit zusammengefaßt und jeweils mit zwei auf Führungsstangen 39 und 40 gehaltenen und durch Rohre 50 bzw. 50′ miteinander verbundenen Behälter 41 und 42 bzw. 43 und 44 zur Aufnahme des Trägermediums 45 bestückt. Mittels Hydraulik-Aggregaten 46 und 47, die miteinander gekoppelt sind, sind über Zugrohre 48 bzw. 49 die Behälter 41 bis 44 gegensinnig antreibbar. Das über die Eingangsöffnung 35 in den Aufnahmetank 32 eingebrachte Substrat 38 strömt hierbei über eine in einer Zwischenwand 34 vorgesehene Leitung 37 im unteren Bereich in den Aufnahmetank 33 ein und über dessen Auslaßöffnung 36 aus.

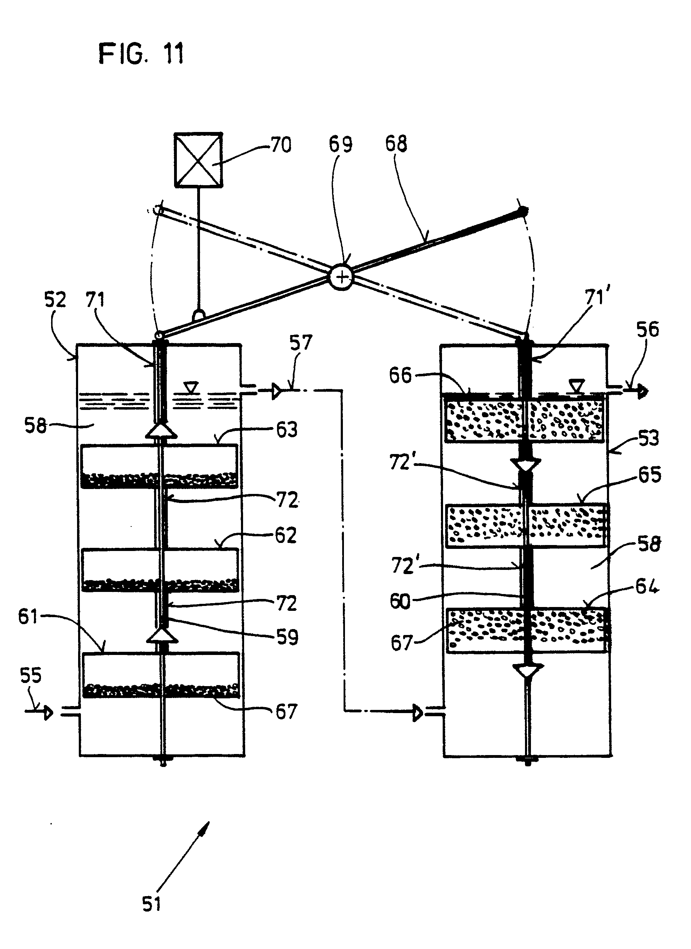

Der Reaktor 51 nach Figur 11 ist ebenfalls aus zwei Aufnahmetanks 52 und 53 zusammengesetzt, die über eine Leitung 57 miteinander verbunden sind. In jeden der Aufnahmetanks 52 und 53 sind hierbei drei auf Stangen 59 bzw. 60 geführte und mit einem Trägermedium 67 versehene Behälter 61, 62 und 63 bzw. 64, 65 und 66 eingesetzt. Der Aufnahmetank 62 ist mit einer in seinem unteren Bereich angeordneten Einlaßöffnung 55, der Aufnahmetank 53 dagegen mit einer im oberen Bereich vorgesehenen Auslaßöffnung 56 ausgestattet, so daß das zu reinigende Stubstrat 58 in einem zweistufigen Verfahren nacheinander jeden der Aufnahmetanks 52 und 53 von unten nach oben durchströmen kann.

Zum Antrieb der höhenverstellbar angeordneten und miteinander durch Verbindungsrohre 72 bzw. 72′ gekoppelten Behälter 61, 62 und 63 bzw. 64, 65 und 66 ist eine Wippe 68 vorgesehen, die auf einer Welle 69 drehbar gelagert, mittels eines Hydraulik-Aggregates 70 antreibbar und über eine Zugstange 71 bzw. 71′ jeweils mit den oberen Behältern 63 und 66 gekoppelt ist. Auf diese Weise ist eine gegensinnige Verstellung der Behälter 61, 62 und 63 gegenüber den Behältern 64, 65 und 66 gewährleistet. Außerdem ist die einzuleitende Antriebsenergie gering, da die Gewichtskräfte der jeweils abwärts bewegten Behälter mit ausgenutzt werden.

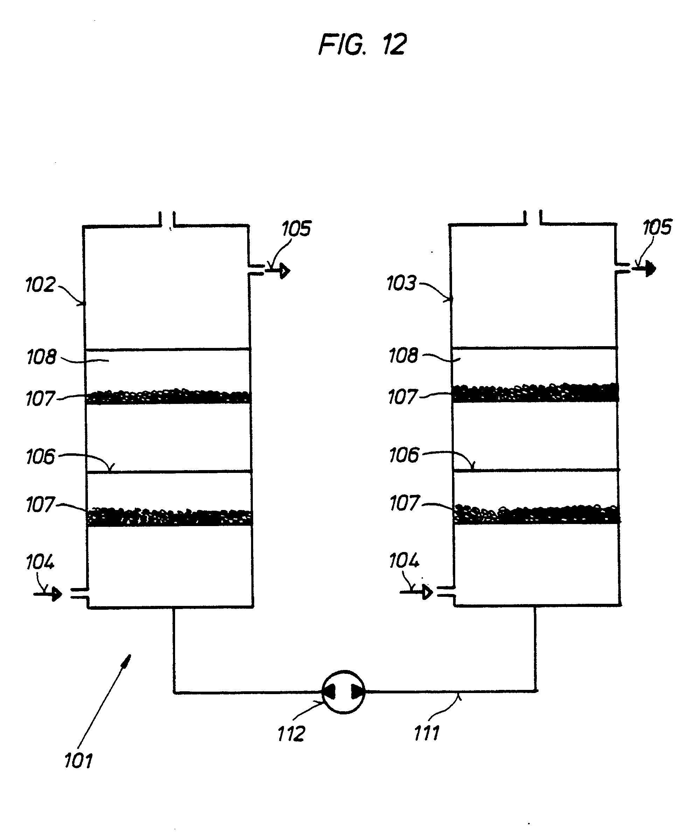

Der in Figur 12 dargestellte Reaktor 101 besteht aus zwei gleichgroß bemessenen Aufnahmetanks 102 und 103, die jeweils mit einer Einlaßöffnung 104 und einer Auslaßöffnung 105 zur Einbringung und zur Entnahme des Substrates 108 versehen sind. Des weiteren sind die Aufnahmetanks 102 und 103 mit übereinander angeordneten ortsfesten Zwischenböden 106 versehen, auf denen das Trägermedium 107 gelagert ist. Die beiden Aufnahmetanks 102 und 103 sind hydraulisch über eine Leitung 111 verbunden, in denen eine Förderpumpe 112 mit umkehrbarer Förderrichtung eingesetzt ist.

Wird die Förderpumpe 112 kurzzeitig eingeschaltet, so wird das in einem der Aufnahmetanks 102 und 103 auf den Zwischenböden 106 lagernde Trägermedium 107 aufgewirbelt, da dieses durch das in den Aufnahmetanks 102 bzw. 103 befindliche Substrat 108 von unten angeströmt wird. Auf diese Weise kann das Trägermedium 107 von Zeit zu Zeit umgeschichtet werden, so daß abgelagerte Feststoffe ausgespült werden können.

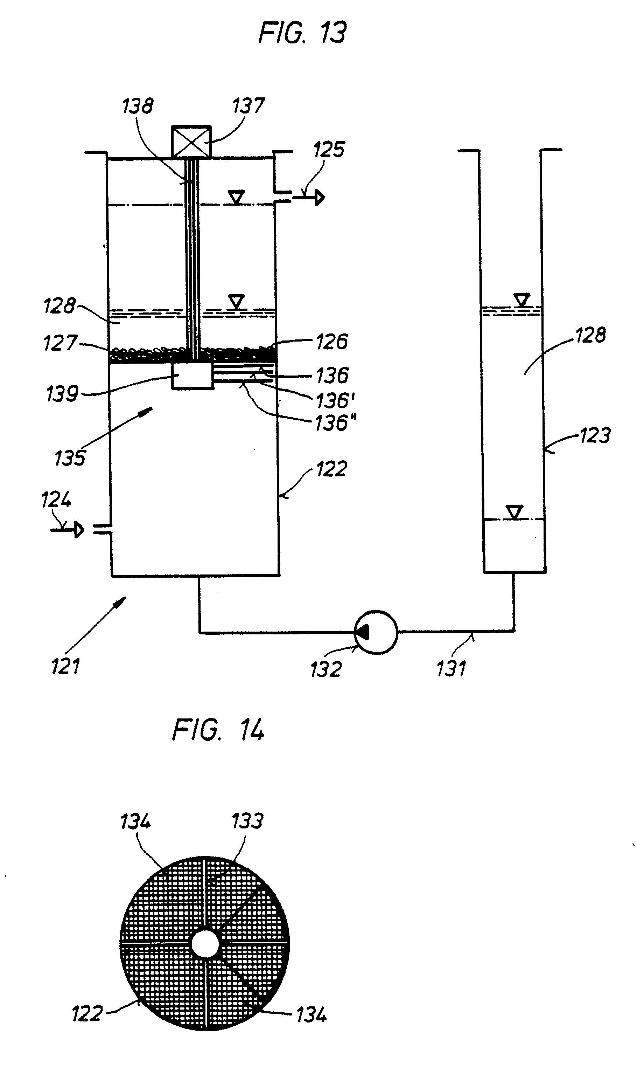

Der Reaktor 121 nach Figur 13 besteht ebenfalls aus zwei Aufnahmetanks 122 und 123, von denen der Aufnahmetank 122 mit einer Einlaßöffnung 124 und einer Auslaßöffnung 125 zur Zu- und Abführung des Substrates 108 sowie mit einem ortsfesten Zwischenboden 126 für das Trägermedium 127 versehen ist. Der Aufnahmetank 123 ist dagegen als Vorratstank ausgebildet. Die beiden Aufnahmetanks 122 und 123 sind zwar auf gleicher Höhe angeordnet, der Aufnahmetank 123 weist aber ein wesentliches geringeres Volumen auf als der Aufnahmetank 122, außerdem sind die beiden Aufnahmetanks 122 und 123 durch eine Leitung 131, in der wiederum eine Förderpumpe 132 eingesetzt ist, hydraulisch miteinander verbunden.

Der Aufnahmetank 122 ist in dem Bereich über dem Zwischenboden 126 durch Zwischenwände 133 in vier Kammern 134 unterteilt und unterhalb des Zwischenbodens 126 ist eine Blende 135 angeordnet, die aus drei verdrehbaren Segmenten 136 136′ und 136″ besteht. Zum Antrieb der Segmente 136, 136′ und 136″ dient ein Antriebsmotor 137, der über eine zentral angeordnete Welle 138 sowie einem Getriebe 139 mit den Segmenten 136, 136′ und 136″ in Triebverbindung steht.

Auf diese Weise ist es möglich, das aus dem Aufnahmetank 123 abgepumpte Substrat 128 jeweils nur einer der Kammern 134, um das auf dem Zwischenboden 136 Lagernde Trägermedium 127 aufzuwirbeln, zuzuführen, so daß eine Förderpumpe mit einer entsprechend geringen Leistung gewählt werden kann. Und da nach dem Umpumpen, wie dies strichpunktiert eingezeichnet ist, aufgrund der unterschiedlichen Volumina der Aufnahmetanks 122 und 123 eine große Gefällhöhe gegeben ist, fließt das Substrat 128 in kurzer Zeit in den Aufnahmetank 123 zurück.

Beim normalen Durchfluß des Aufnahmetanks 122 werden dagegen die Segmente 136, 136′ und 136″, wie dies in Figur 14 eingezeichnet ist, derart übereinander angeordnet, daß von diesen jeweils nur eine Hälfte zweier benachbarter Kammern 134 abgedeckt sind. Das Substrat 128 kann somit den gesamten Aufnahmetank 123 und das auf dem Zwischenboden 106 gelagerte Trägermedium 127 vertikal durchströmen.

## Ansprüche

1. Reaktor zum mikrobiellen Abbau organisch belateter Substrate, bestehend aus mindestens einem von dem Substrat durchströmten Aufnahmetank und einem in diesem vorgesehenen Trägermedium zum Ansiedeln der Bakterien,

**dadurch gekennzeichnet,**

daß das Trägermedium (12; 22; 45; 67; 20, 20′; 107; 127) in einem von dem Substrat (5; 108; 128) durchströmbaren, dem inneren Querschnitt des Aufnahmetanks (2; 32, 33; 52, 53; 102, 103; 122, 123) angepaßten Behälter (11; 21; 41, 42, 43, 44; 61, 62, 63, 64, 65, 66) eingesetzt, an einem Halter (19, 19′) angebracht oder auf einem Zwischenboden (106; 126) gelagert ist und daß zum Aufwirbeln des Trägermediums der Behälter (11; 21; 41, 42, 43, 44; 61, 62, 63, 64, 65, 66) bzw. der Halter (19, 19′) in dem Aufnahmetank (2; 32, 33; 52, 53) höhenverstellbar und/oder rotierend antreibbar angeordnet und/oder das Substrat (108; 128) impulsweise von unten von dem Trägermedium (107; 127) ausströmbar ist.

2. Reaktor nach Anspruch 1,
**dadurch gekennzeichnet,**
daß der Behälter (11) aus einem Drahtgeflecht (13) gebildet ist, dessen Maschenweite geringfügig kleiner bemessen ist als die Korngröße des Trägermediums (12).

3. Rekator nach Anspruch 1,
**dadurch gekennzeichnet,**
daß der Behälter (21) aus zwei mit Abstand zueinander gehaltenen Lochscheiben (23) gebildet ist, deren Durchtrittsöffnungen für das Substrat (5) geringfügig kleiner bemessen sind als die Korngröße des Trägermediums (22).

4. Reaktor nach Anspruch 1,
**dadurch gekennzeichnet,**
daß der Halter (19, 19') bzw. der Zwischenboden (106; 126) als Lochscheibe oder als von dem Substrat (5; 108; 128) durchströmbarer ein- oder zweiteiliger Rahmen, beispielsweise in Form eines Rechens, ausgebildet ist.

5. Reaktor nach einem oder mehreren der Ansprüche 1 bis 4,
**dadurch gekennzeichnet,**
daß der Behälter (11) bzw. der Halter (19, 19') auf der oberen Seite mit abstehenden Nocken oder dgl. z. B. in Form eines Rechens (15) zur Auflösung einer Schwimmschicht versehen ist.

6. Reaktor nach einem oder mehreren der Ansprüche 1 bis 5,
**dadurch gekennzeichnet,**
daß der Behälter (11; 21) mit Einbauten z. B. in Form von Wirbelblechen (16; 27) zur Durchwirbelung des Substrates (5) und/oder des Trägermediums (12; 22) versehen ist.

7. Reaktor nach einem oder mehreren der Ansprüche 1 bis 6,
**dadurch gekennzeichnet,**
daß der Behälter (21) bzw. der Halter mit Auftriebsmitteln z. B. in Form von in dessen äußeren Bereich angeordneten Luftkammern (26) versehen ist.

8. Reaktor nach einem oder mehreren der Ansprüche 1 bis 7,
**dadurch gekennzeichnet,**
daß zur Aufnahme des Trägermediums (45; 67; 107; 121) in einem Aufnahmetank (32, 33; 52, 53; 102, 103; 122, 123) mehrere mit Abstand zueinander angeordnete Behälter (41, 42, 43, 44; 61, 62, 63, 64, 65, 66) bzw. Halter bzw. Zwischenböden (106; 126) vorgesehen sind.

9. Reaktor nach einem oder mehreren der Ansprüche 1 bis (8,
**dadurch gekennzeichnet,**
daß bei einem aus zwei vorzugsweise zu einer Baueinheit zusammengefaßten Aufnahmetanks (32, 33; 52, 53) gebildeten Reaktors (31; 51) die Behälter (41, 42, bzw. 43, 44; 61, 62, 63 bzw. 64, 65, 66) bzw. Halter der Aufnahmetanks (32, 33; 52, 53) gegensinnig zueinander höhenverstellbar sind.

10. Reaktor nach einem oder mehreren der Ansprüche 1 bis 9,
**dadurch gekennzeichnet,**
daß bei einem aus zwei Aufnahmetanks (32, 33; 52, 53) gebildeten Reaktor (41; 51) die Antriebsmittel der höhenverstellbaren Behälter (41, 42, 43, 44; 61, 62, 63, 64, 65, 66) bzw. der Halter mittels Hydraulik-Aggregaten (46, 47) über eine drehbar gelagerte vorzugsweise angetriebene Wippe (68) oder auf ähnliche Weise zwangläufig miteinander verbunden sind.

11. Reaktor nach einem oder mehreren der Ansprüche 1 bis 10,
**dadurch gekennzeichnet,**
daß bei einem aus zwei Aufnahmetanks (32, 33; 52, 53) gebildeten Reaktor (31; 51) die Gewichtskräfte der in den einzelnen Aufnahmetanks (32, 33; 52, 53) eingesetzten höhenverstellbaren Behälter (41, 42, 43, 44; 61, 62, 63, 64, 65, 66) oder Halter und der in diesen enthaltenen Trägermedien (45; 67) jeweils etwa gleich groß bemessen sind.

12. Reaktor nach einem oder mehreren der Ansprüche 1 bis 11,
**dadurch gekennzeichnet,**
daß zur schubweisen Durchführung des Substrates (108; 128) durch das vorzugsweise auf ortsfesten Zwischenböden (106, 126) gelagerten Trägermediums (107; 127) zwei Aufnahmetanks (102, 103; 122, 123) des Reaktors (101; 121) hydraulisch miteinander verbunden sind und daß in deren Verbindungsleitung (111; 131) eine Förderpumpe (112; 132) eingesetzt ist.

13. Reaktor nach Anspruch 12,
**dadurch gekennzeichnet,**
daß einer der Aufnahmetanks (122) mit einem oder mehreren Zwischenböden (126) zur Lagerung des Trägermediums (127) versehen und der andere Aufnahmetank (123) als auf gleicher Höhe angeordneter Vorratstank ausgebildet ist, der in seinem Volumen geringer bemessen ist als der mit diesem hydraulisch verbundene andere Aufnahmetank (122).

14. Reaktor nach Anspruch 12 oder 13,
**dadurch gekennzeichnet,**
daß der das Trägermedium (127) aufnehmende Aufnahmetank (122) ganz oder teilweise in vertikal verlaufende voneinander getrennte Kammern (134) unterteilt ist und daß das Substrat (128) zum Aufwirbeln des Trägermediums (127) gesteuert den einzelnen Kammern (134) zuführbar ist.

15. Reaktor nach Anspruch 14,
**dadurch gekennzeichnet,**
daß zur gesteuerten Zuführung des Substrates (128) in die einzelnen Kammern (134) des Aufnahmetanks (122) eine vorzugsweise unterhalb eines Zwischenbodens (126) angeordnete, aus einzelnen verdrehbaren Segmenten (136, 136′, 136″) gebildete fächerartige Blende (135), ein Drehverteiler, einzelne in die Kammer (134) mündende Zuführungsleitungen oder dgl. vorgesehen sind.

16. Reaktor nach einem oder mehreren der Ansprüche 1 bis 15,
**dadurch gekennzeichnet,**
daß als Trägermedium (12; 22; 45; 67) ein Stoff vorgesehen ist, dessen Dichte etwa 1 g/cm³ , vorzugsweise geringfügig über oder unter 1 g/cm³, beträgt.

17. Reaktor nach Anspruch 16,
**dadurch gekennzeichnet,**
daß als Trägermedium (12; 22; 45; 67) ein Granulat mit einer großen Oberfläche, beispielsweise Blähton, Aktivkohle, Kunststoffteile oder ein ähnliches schüttfähiges Gut, vorgesehen ist.

18. Reaktor nach Anspruch 16,
**dadurch gekennzeichnet,**
daß als Trägermedium (12; 22; 45; 67) Glaskugeln mit einem Durchmesser von etwa 3 - 5 mm oder Glasschwämme vorgesehen sind.

19. Reaktor nach einem oder mehreren der Ansprüche 1 bis 18,
**dadurch gekennzeichnet,**
daß bei einem Trägermedium (12; 22; 45; 67), dessen Dichte über 1 g/cm³ oder unter 1 g/cm³ beträgt, die Absenkgeschwindigkeit des Behälters (11; 21; 41, 42, 43, 44; 61, 62, 63, 64, 65, 66) größer bzw. kleiner bemesen ist als die Geschwindigkeit bei dessen Rückführung.

20. Reaktor nach einem oder mehreren der Ansprüche 1 bis 19,
**dadurch gekennzeichnet,**
daß bei einem Trägermedium (12), dessen Dichte unter 1 g/cm³ beträgt, der Behälter (11) als U-förmiger nach unten offener Käfig ausgebildet ist.

21. Reaktor nach einem oder mehreren der Ansprüche1 bis 15,
**dadurch gekennzeichnet,**
daß als Trägermedium (20, 20′) mit seitlichem Abstand zueinander angeordnete Gewebebahnen und/oder Streifen aus Kunststoff oder einem ähnlichen Material vorgesehen sind, die ein- oder beidseitig, vorzugsweise mit ihrem oberen Ende an dem Halter (19, 19′) befestigt sind.

22. Reaktor nach Anspruch 21,
**dadurch gekennzeichnet,**
daß der Aufnahmetank (2) mit einem oder mehreren im Verstellbereich des Halters (19) angeordneten Abstreifern (30) z. B. in Form eines zwischen die Gewebebahnen eingreifenden Rechens versehen ist.

FIG. 1

FIG. 2

FIG. 3

# FIG. 4

# FIG. 5

# FIG. 6

# FIG. 7

# FIG. 8

# FIG. 9

## FIG. 10

# FIG. 11

## FIG. 12

## FIG. 13

## FIG. 14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-7 847 06  (ENTREPRISES ET D'APPLICATIONS SANITAIRES) <br> * Figuren 2,3; Seite 3, Zeilen 12-22 * | 1,2 | C 02 F 3/08 <br> C 02 F 3/12 |
| X | FR-A-1 579 195  (SIRIUS) <br> * Ansprüche * | 1,2 | |
| Y | | 16,17 | |
| Y | GB-A-5 088 81  (PETERSEN) <br> * Anspruch 8 * | 16,17 | |
| Y | DE-A-2 944 804  (KUREHA KAGAKU) <br> * Figur 4; Seite 5, Zeilen 16-33 * | 1,10,21 | |
| Y | EP-A-0 056 083  (SCHOELLER) <br> * Zusammenfassung * | 1,10,21 | |
| A | FR-A-2 528 030  (SOC. GEN. POUR LES TECHNIQUES NOUVELLES) <br> * Seite 6, Zeilen 1-9 * | 1,2 | |
| A | WO-A-8 605 770  (INSINÖ-ÖRITOIMISTO LUJARI OY) <br> * Seite 5, Zeilen 3-11 * | 1,2,16,17 | **RECHERCHIERTE SACHGEBIETE (Int. Cl.5)** <br><br> C 02 F |
| A | US-A-2 559 704  (BEVAN) <br> * Spalte 2, Zeilen 40-44; Spalte 11, Zeilen 46-53 * | 1,21 | |
| A | BE-A-7 883 97  (FABRICOM) <br> * Abbildungen * | 1,10 | |
| A | US-A-4 026 802  (KIYOSI AKAE) <br> * Spalte 4, Zeilen 63-65 * | 1 | |

Der vorliegende Recherchenbericht wurde für alle Patentansprüche erstellt

| Recherchenort | Abschlußdatum der Recherche | Prüfer |
|---|---|---|
| Den Haag | 20 November 90 | KASPERS H.M.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                         

& : Mitglied der gleichen Patentfamilie, übereinstimmendes Dokument